# EUROPÄISCHE PATENTSCHRIFT

(11) **EP 0 514 635 B1**
(45) Veröffentlichungstag und Bekanntmachung des Hinweises auf die Patenterteilung: **09.08.1995**
(21) Anmeldenummer: 92103974.9
(22) Anmeldetag: 09.03.1992
(51) Int. Cl.: G05B 15/02, G05D 23/19, G05B 11/32, F28F 27/00, F24F 11/06

(54) **Steuerung, bei der ausgefallene Eingangssignale durch statistisch Warscheinliche Signale ersetzt werden**
Control in which deficient input signals are replaced by statistically probable signals
Contrôle dans lequel un signal d'entrée défectueux est remplacé par un signal statistiquement probable

(30) Priorität: 22.05.1991 DE 4116663
(43) Veröffentlichungstag der Anmeldung: 25.11.1992
(73) Patentinhaber: GEA Happel Klimatechnik GmbH, D-44625 Herne (DE)
(72) Erfinder: Linker, Helmut, W-4690 Herne 2 (DE); Pedron, Lothar, W-4630 Bochum (DE)
(74) Vertreter: COHAUSZ HASE DAWIDOWICZ & PARTNER

(56) Entgegenhaltungen:
- DD-A- 74 055
- DD-A- 224 695
- DE-A- 1 523 648
- GB-A- 2 152 248

## Beschreibung

Die Erfindung betrifft eine Steuerung, die im Normalbetrieb in Abhängigkeit von Eingangssignalen Stellsignale von veränderlicher Größe abgibt. Solche Steuerungen dienen zur Regelung von Verfahren, deren Ablauf durch die Betriebsbedingungen, beispielsweise durch den Temperatur- oder Lastverlauf, beeinflußt werden. Dabei werden die Änderungen der Betriebsbedingungen durch Sensoren gemessen, die als Eingangssignale der Steuerung in Abhängigkeit von der Änderung der Betriebsbedingungen Ströme oder Spannungen von unterschiedlicher Größe liefern.

Da durch die Steuerung die Eingangssignale zur Bestimmung der Größe der Stellsignale miteinander in Beziehung gesetzt werden, führt ein Ausfall nur eines der Eingangssignale zu einer falschen Bestimmung der Größe der Stellsignale. Daher mußte bisher bei einem Störfall bei Ausfall eines der Eingangssignale die automatische Steuerung des Verfahrens durch eine Handsteuerung oder durch statische Stellsignale von fest vorgegebener Größe abgebenden Steuerung ersetzt werden. Die Steuerung von Hand hat den Nachteil, daß dazu eine Bedienungsperson eingesetzt werden muß, die den Verfahrensablauf ständig überwacht und das Stellsignal entsprechend den sich ändernden Betriebsbedingungen anpaßt.

Demgegenüber erfordert die statische Steuerung zwar kein zusätzliches Personal, mit einer solchen Steuerung ist es jedoch aufgrund der fest vorgegebenen Größe der Stellsignale nicht möglich, einen den Betriebsbedingungen angepaßten Verfahrensablauf zu gewährleisten.

Dokument DD-A-224 695 beschreibt außerdem einen technologischer Prozess, bei dem bei Ausfall eines Signals eine Stellgrößenberechnung auf der Basis meßbarer Systemausgangssignale gewährleistet wird, um damit eine Weiterführung des Prozesses zu sichern.

Die Aufgabe der Erfindung besteht dagegen darin, eine Steuerung anzugeben, mit der auch bei Ausfall eines der Eingangssignale die Größe der Stellsignale automatisch so bestimmt werden, daß eine optimale Annäherung an die tatsächlichen Betriebsbedingungen erzielt wird.

Diese Aufgabe wird erfindungsgemäß dadurch gelöst, daß während des Normalbetriebs für jede Größe des Stellsignals die Zeitintervalle aufsummiert werden, über die das Stellsignal diese Größe annimmt, und daß die Steuerung bei Ausfall eines der Eingangssignale als Stellsignale Ersatzsignale abgibt, für die bezogen auf die Summen der Zeitintervalle die größte Wahrscheinlichkeit bestimmt worden ist.

Indem für jede Größe der Stellsignale die gesamte Abgabezeit nach Art eines Histogramms erfaßt wird, kann die Größe der Ersatzsignale unter Berücksichtigung der in der Vergangenheit häufigst aufgetretenen Betriebsbedingungen durch die Steuerung selbst ermittelt werden. Mit dem so gewonnenen Erfahrungswert ist auch während des Notbetriebs mit einer solchen Steuerung eine optimale Annäherung an die tatsächlichen Betriebsbedingungen möglich.

Um die Wahrscheinlichkeit der Größe der Ersatzsignale abschätzen zu können ist eine Mindestdauer des störungsfreien Normalbetriebs notwendig. Dabei steigt die Sicherheit, mit der die Wahrscheinlichkeit der an die häufigste Betriebsbedingung gekoppelten Größe des Ersatzsignals abgeschätzt werden kann, mit der Dauer dieses Normalbetriebs.

Die Steuerung läßt sich besonders einfach verwirklichen, wenn bei Abgabe der Stellsignale der Wert von den Größen der Stellsignale zugeordneten digitalen Speicherplätzen durch in Abhängigkeit von einer Zeitkonstanten getaktete Zähler erhöht werden. Auf diese Weise läßt sich die Steuerung ohne Aufwand in eine digitale Rechnereinheit integrieren, von der auch die Auswertung der Summen der Zeitintervalle und die Bestimmung der Größe der Ersatzsignale ausgeführt werden kann.

Da die in den digitalen Rechneranlagen abgespeicherten Werte bei vorgegebenem Speicherplatz nur einen begrenzten Betrag annehmen können, ist es bei langer Betriebsdauer sinnvoll, daß, wenn der Wert von einem der den Größen eines Stellsignals zugeordneten Speicherplätzen einen Maximalwert erreicht, die Werte aller den Größen dieses Stellsignals zugeordneten Speicherplätzen durch Division mit einem konstanten Faktor auf einen Bruchteil reduziert werden. Auf diese Weise können die in den digitalen Speicherplätzen enthaltenen Beträge verringert werden, ohne daß ihre Aussagekraft für die Wahrscheinlichkeit einer Größe der Stellsignale beeinträchtigt wird. Dabei hat sich zur Division der Werte der Speicherplätze ein konstanter Faktor mit dem Wert 2 besonders bewährt.

Die Wahrscheinlichkeiten der Größen der Stellsignale können besonders leicht bestimmt werden, wenn ihnen die Werte der Summen der Zeitintervalle direkt zugeordnet werden.

Auf diese Weise ist es möglich, daß als Größe der Ersatzsignale die Größe der Stellsignale abgegeben werden, für die die größten Summen der Zeitintervalle ermittelt wurden.

Die Größe des Ersatzsignales läßt sich besonders leicht, in kurzer Zeit und mit höherer Genauigkeit dadurch ermitteln, daß zur Beurteilung der Wahrscheinlichkeit der Größe der Ersatzsignale die den Größen der Stellsignale zugeordneten Summen jeweils gegenüber einer begrenzten Zahl ihrer rechten und linken Nachbarn abgeschätzt werden.

Eine weitere Steigerung der Sicherheit bei der Bestimmung der Wahrscheinlichkeit der Größe der Ersatzsignale kann dadurch erzielt werden, daß die zur Beurteilung der Wahrscheinlichkeit einbezogenen Summen der Zeitintervalle eines Stellsignals und seiner Nachbarn mit Binominal-Koeffizienten entsprechend ihrer Anzahl gewichtet werden.

Eine noch genauere Beurteilung der Wahrscheinlichkeit der Größe des Ersatzsignales ergibt sich, wenn die Wahrscheinlichkeit der Größe der Ersatzsignale bezogen auf die den Größen der Stellsignale zugeordneten Summen mittels der Gaußschen Normalverteilung bewertet werden.

Wenn von mehreren Eingangssignalen nur eine begrenzte Anzahl gestört oder ausgefallen ist, ist es sinnvoll, die Wahrscheinlichkeit der Größe der Ersatzsignale unter Berücksichtigung der noch vorhandenen Eingangssignale abzuschätzen. Auf diese Weise läßt sich die Annäherung an die optimale Größe des Ersatzsignales weiter verbessern.

In der Praxis hat sich die erfindungsgemäße Steuerung besonders als Teil einer Regeleinheit für eine kältetechnische Anlage bewährt.

Im folgenden soll die Erfindung anhand von ein Beispiel zeigenden Zeichnungen näher erläutert werden. Es zeigen:
- Figur 1:: Ein Diagramm, in dem die Summen der einzelnen Zeitintervalle über den zugehörigen Größen der Stellsignale aufgetragen sind;
- Figur 2:: Eine schematische Zeichnung einer kältetechnischen Anlage, in der die Steuerung eingesetzt ist.

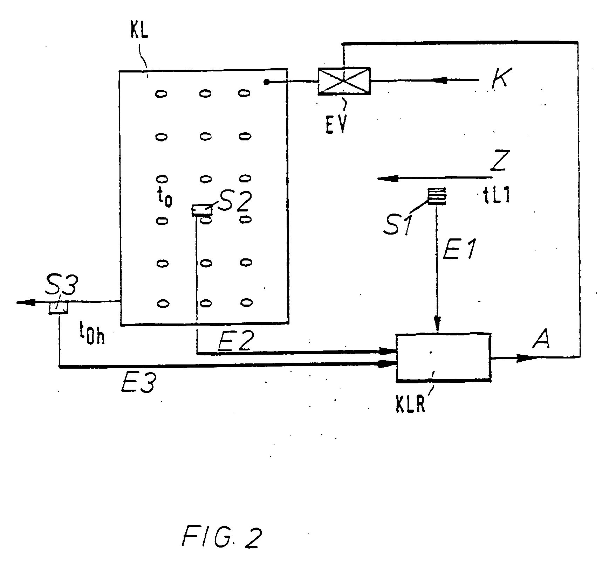

Die kältetechnische Anlage nach Figur 2 dient zum Kühlen eines Zuluftstromes Z. Sie weist einen als Expansionskühler wirkenden Luftkühler KL, ein Expansionsventil EV, Sensoren S1,S2,S3 und zur Steuerung der kältetechnischen Anlage eine Rechnereinheit KLR auf. Das Kühlmittel K wird durch einen nicht gezeigten Zweistufen-Kompressor über das Expansionsventil EV in den Luftkühler KL gefördert.

Die Zuluft Z strömt durch den Luftkühler KL in einen Kühlraum ein. Dabei wird die Eingangstemperatur tL1 der Zuluft Z durch den Sensor S1, die Temperatur des Luftkühlers to durch den Sensor S2 und die Temperatur am Ausgang des Luftkühlers toh durch den Sensor S3 erfaßt. Die Signale der Sensoren werden als Eingangssignale E1,E2,E3 der Rechnereinheit KLR zugeführt. Durch Vergleich der Eingangssignale mit vorgegebenen Sollwerten wird die Größe des Stellsignals A ermittelt, durch das die Stellung des Expansionsventils EV bestimmt ist.

Vor dem Einschalten der kältetechnischen Anlage werden in der Rechnereinheit enthaltene digitale Speicherzellen die den Größen des Stellsignals A zugeordnet sind, auf 0 gesetzt. Im anschließenden Normalbetrieb nimmt das Stellsignal A eine durch die Eingangssignale E1,E2 und E3 bestimmte Größe AG1 ein. Gleichzeitig wird der Wert AS1 des dieser Größe AG1 des Stellsignals A zugeordneten Speicherplatzes durch ein in Abhängigkeit von einer Zeitkonstante getakteten Zähler erhöht. Ändern sich die Betriebsbedingungen, beispielsweise durch eine niedrigere Temperatur tL1 der Zuluft Z, so bestimmt die Rechnereinheit KLR eine neue Größe AG2 des Stellwertes A und es wird nun der Wert AS2 des Speicherplatzes erhöht, der dieser neuen Größe AG2 des Stellwerts A zugeordnet ist. Dabei bleibt der Wert AS1 erhalten, bis das Stellsignal A wieder die diesem Speicherplatz zugeordnete Größe AG1 annimmt und der Wert AG1 in Abhängigkeit von dem Zählertakt weiter erhöht wird.

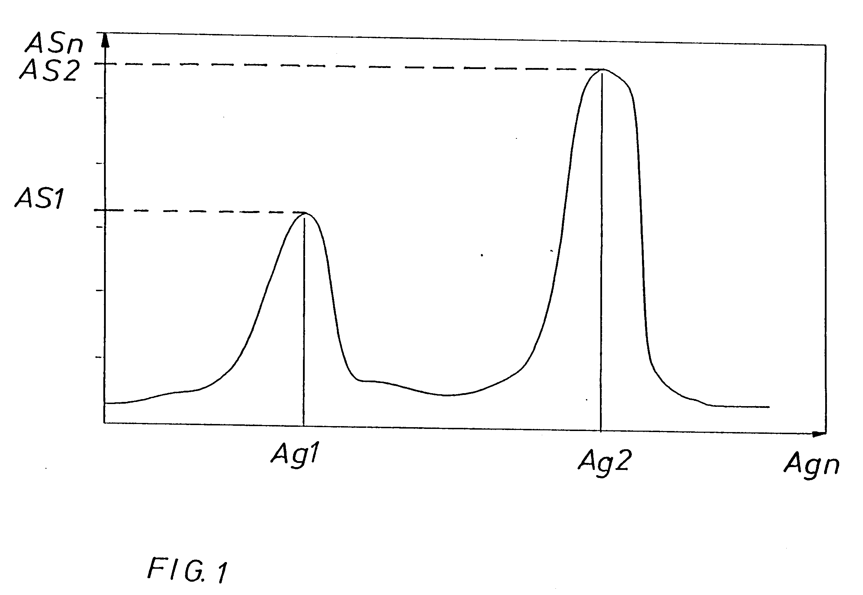

Figur 1 zeigt das Ergebnis dieser Summenbildungen, wie es sich typischer Weise bei Verwendung eines zweistufigen Kompressors darstellt. In dem Diagramm sind die Größen AGn des Stellsignals A auf der Abszisse und die in den ihnen zugeordneten Speicherplätzen enthaltenen, auf die gesamte Abgabedauer der Größe des Stellsignals A bezogene Summen ASn auf der Ordinate aufgetragen.

Bei Ausfall eines der Eingangssignale E1,E2 oder E3 wird durch die Rechnereinheit anhand der Gaußschen-Normalverteilung die Größe des Ersatzsignals anhand der Summen ASn abgeschätzt. Bei einer Verteilung der Summen, wie sie in dem Diagramm nach Figur 1 wiedergegeben ist, wird dies die Größe AG2 sein, weil sowohl der Wert dieser Größe zugeordneten Summe als auch die Werte der unmittelbar benachbarten Summen groß sind gegenüber den übrigen Summen.

## Patentansprüche

1. Steuerung, die im Normalbetrieb in Abhängigkeit von Eingangssignalen (E1,E2,E3) Stellsignale (A) von veränderlicher Größe abgibt, **dadurch gekennzeichnet**, daß während des Normalbetriebs für jede Größe des Stellsignals die Zeitintervalle aufsummiert werden, über die das Stellsignal diese Größe annimmt, und daß die Steuerung bei Ausfall eines der Eingangssignale als Stellsignale Ersatzsignale (AG2) abgibt, für die bezogen auf die Summen (AS2) der Zeitintervalle die größte Wahrscheinlichkeit bestimmt worden ist.

2. Steuerung nach Anspruch 1, **dadurch gekennzeichnet**, daß bei Abgabe der Stellsignale der Wert von den Größen der Stellsignale zugeordneten digitalen Speicherplätzen durch in Abhängigkeit von einer Zeitkonstante getaktete Zähler erhöht werden.

3. Steuerung nach Anspruch 2, **dadurch gekennzeichnet**, daß, wenn der Wert von einem der den Größen eines Stellsignals zugeordneten Speicherplätzen einen Maximalwert erreicht, die Werte aller den Größen dieses Stellsignals zugeordneten Speicherplätzen durch Division mit einem konstanten Faktor auf einen Bruchteil reduziert werden.

4. Steuerung nach Anspruch 3, **dadurch gekennzeichnet**, daß der konstante Faktor den Wert 2 hat.

5. Steuerung nach einem der vorhergehenden Ansprüche, **dadurch gekennzeichnet**, daß als Größe der Ersatzsignale die Größe der Stellsignale abgegeben werden, für die die größten Summen der Zeitintervalle ermittelt wurden.

6. Steuerung nach einem der vorhergehenden Ansprüche, **dadurch gekennzeichnet**, daß zur Beurteilung der Wahrscheinlichkeit der Größe der Ersatzsignale die den Größen der Stellsignale zugeordneten Summen jeweils gegenüber einer begrenzten Zahl ihrer rechten und linken Nachbarn abgeschätzt werden.

7. Steuerung nach Anspruch 6, **dadurch gekennzeichnet**, daß die zur Beurteilung der Wahrscheinlichkeit einbezogenen Summen der Zeitintervalle eines Stellsignals und seiner Nachbarn mit Binominal-Koeffizienten entsprechend ihrer Anzahl gewichtet werden.

8. Steuerung nach einem der vorhergehenden Ansprüche, **dadurch gekennzeichnet**, daß die Wahrscheinlichkeit der Größe der Ersatzsignale bezogen auf die den Größen der Stellsignale zugeordneten Summen mittels der Gaußschen Normalverteilung bewertet werden.

9. Steuerung nach einem der vorhergehenden Ansprüche, **dadurch gekennzeichnet**, daß bei Ausfall eines der Eingangssignale die Wahrscheinlichkeit der Größe Ersatzsignale unter Berücksichtigung der noch vorhandenen Eingangssignale abgeschätzt werden.

10. Steuerung nach einem der vorhergehenden Ansprüche, **dadurch gekennzeichnet**, daß die Steuerung Teil einer Regeleinheit für eine kältetechnische Anlage ist.

## Claims

1. A control system which, during normal operation, outputs actuating signals (A) of variable levels as a function of input signals (E1, E2, E3), **characterized in that**, during such normal operation, the time intervals for which the actuating signal assumes a given level are totalized for each such actuating signal level, and that in the case of a failure of one of said input signals, the control system outputs substitute signals (AG2) instead of said actuating signals, having estimated said substitute signals to have the highest probability on the basis of the sums total (AS2) of said time intervals.

2. A control system as set forth in claim 1, **characterized in that** as each actuating signal is output, the values of digital memory locations associated with said actuating signal levels are incremented by counters clocked on a time constant basis.

3. A control system as set forth in claim 2, **characterized in that** when the value at one memory location associated with the values of a given actuacting signal reaches a maximum, the values of all memory locations associated with the levels of this actuating signal are reduced to a fraction through division by a constant factor.

4. A control system as set form in claim 3, **characterized in that** said constant factor has the value 2.

5. A control system as set forth in any of the preceding claims, **characterized in that** the substitute signals are output at a level identical to that of the actuating signals for which the system has determined the highest sum total of said time intervals.

6. A control system as set forth in any of the preceding claims, **characterized in that** for the purposes of determining the probability of the substitute signal level, the sums total associated with the actuating signal levels are in each case estimated in comparison with a limited number of their neighbours to the left and right.

7. A control system as set forth in claim 6, **characterized in that** for the purposes of the probability estimate, the sums total of the time intervals during which a given actuating signal has been delivered, as well as the corresponding sums total for its neighbours, are weighted by application of a binomial coefficient reflecting their number.

8. A control system as set forth in any of the preceding claims, **characterized in that** the probabilities of the substitute signal levels are evaluated on the basis of the sums total associated with the actuating signal levels by drawing on the Gaussian law of normal distribution.

9. A control system as set forth in any of the preceding claims, **characterized in that** if one input signal fails, the probability of the substitute signal level is estimated taking into account the input signals still present.

10. A control system as set forth in any of the preceding claims, **characterized in that** said control system is part of a control unit for a cryogenic plant.

## Revendications

1. Commande qui, en fonctionnement normal, délivre des signaux de réglage (A) de grandeur variable en fonction de signaux d'entrée (E₁, E₂, E₃),
caractérisée en ce que, pendant le fonctionnement normal, pour chaque grandeur du signal de réglage, on totalise les intervalles de temps pendant lesquels le signal de réglage prend cette valeur et en ce que la commande, en cas de défaut d'un des signaux d'entrée, délivre en tant que signaux de réglage des signaux de remplacement (AG₂) pour lesquels a été déterminée la probabilité la plus élevée par rapport aux sommes (AS₂) des intervalles de temps.

2. Commande selon la revendication 1,
caractérisée en ce que, lors de l'émission des signaux de réglage, les valeurs sont augmentées des grandeurs des emplacements de mémoire numériques adjoints aux signaux de réglage par un compteur synchronisé en fonction d'une constante de temps.

3. Commande selon la revendication 2,
caractérisée en ce que, lorsque la valeur d'un des emplacements de mémoire adjoint aux grandeurs d'un signal de réglage atteint une valeur maximale, les valeurs de tous les emplacements de mémoire adjoints aux grandeurs de ce signal de réglage sont réduites à une fraction par division par un facteur constant.

4. Commande selon la revendication 3,
caractérisée en ce que le facteur constant a la valeur 2.

5. Commande selon l'une des revendications précédentes,
caractérisée en ce que, en tant que grandeurs des signaux de remplacement, on délivre les grandeurs des signaux de réglage pour lesquels les sommes les plus élevées des intervalles de temps ont été déterminées.

6. Commande selon l'une des revendications précédentes,
caractérisée en ce que, pour l'appréciation de la probabilité des grandeurs des signaux de remplacement, les sommes adjointes aux grandeurs des signaux de réglage sont évaluées respectivement par rapport à un nombre limité de leurs voisins de droite et de gauche.

7. Commande selon la revendication 6,
caractérisée en ce que les sommes des intervalles de temps d'un signal de réglage et de ses voisins intégrées pour l'appréciation de la probabilité sont pondérées par des coefficients du binôme en correspondance à leur nombre.

8. Commande selon l'une des revendications précédentes,
caractérisée en ce que la probabilité des grandeurs des signaux de remplacement rapportée aux sommes adjointes des grandeurs des signaux de réglage est pondérée par la distribution d'erreurs de Gauss.

9. Commande selon l'une des revendications précédentes,
caractérisée en ce que, en cas de défaut d'un des signaux d'entrée, la probabilité des grandeurs des signaux de remplacement est évaluée en tenant compte des signaux d'entrée encore disponibles.

10. Commande selon l'une des revendications précédentes,
caractérisée en ce que la commande est une partie d'une unité régulatrice pour une installation frigorifique.
